# EUROPEAN PATENT APPLICATION

(11) **EP 4 843 912 A1**
(43) Date of publication of application: **25.11.2026**
(21) Application number: 24918445.8
(22) Date of filing: 26.12.2024
(51) Int. Cl.: B65D 65/40, B32B 7/12, B32B 9/00, B32B 27/32, B32B 27/34

(54) **PACKAGING MATERIAL, METHOD FOR MANUFACTURING SAME, AND PACKAGING BAG**

(30) Priority: 15.01.2024 JP 2024004081
(71) Applicant: Toppan Holdings Inc., Tokyo 110-0016 (JP)
(72) Inventor: MASUKO, Tatsuya, Tokyo 110-0016 (JP)
(74) Representative: TBK
(86) International application number: PCT/JP2024/046209
(87) International publication number: WO 2025/154535

(57) **Abstract**

A packaging material including a structure in which a transparent vapor-deposited barrier film, an oriented nylon film, and an unoriented polypropylene film are laminated in this order, in which the transparent vapor-deposited barrier film and the oriented nylon film are laminated via an adhesive layer including a cured product of a solvent-free adhesive, and a ratio of a Young's modulus in an MD direction of the unoriented polypropylene film to a thickness of the unoriented polypropylene film is 9.0 MPa/µm or more.

## Description

### [Technical Field]

The present disclosure relates to a packaging material, a method for manufacturing the same, and a packaging bag.

### [Background Art]

Conventionally, packaging materials used to package food, pharmaceuticals, and the like employ multilayer films in which films having various functions are laminated. For example, PTL 1 discloses a packaging material formed by dry-laminating a polyethylene terephthalate film, a vapor-deposited barrier film, an oriented nylon film, and an unoriented polypropylene film. The vapor-deposited barrier film is also referred to as a transparent vapor-deposited barrier film or the like due to its high transparency.

### [Citation List]

### [Patent Literature]

[PTL 1] JP 2006-117275 A

### [Summary of the Invention]

### [Technical Problem]

In PTL 1 described above, a solvent-based adhesive is used to bond films together. However, in recent years, from the perspective of reducing environmental impact and the like, it has been desired to use a solvent-free adhesive.

However, when using a solvent-free adhesive, the aging period required to harden the adhesive can be prolonged. In addition, due to factors such as surface irregularities on the coating film caused by the increased viscosity of the adhesive, bubbles may remain between films (in particular, at the interface between the adhesive layer and a film). Such bubbles occur remarkably when a solvent-free adhesive is used to bond a barrier film to an oriented nylon film, and when the barrier film is a transparent vapor-deposited barrier film, the bubbles are visually recognized as spot-like appearance defects (e.g., orange-peel or pear-skin-like defects).

Accordingly, one aspect of the present disclosure aims to suppress appearance defects that occur when a solvent-free adhesive is used to bond a transparent vapor-deposited barrier film to an oriented nylon film in the manufacture of a packaging material. Another aspect of the present disclosure aims to provide a packaging material in which the appearance defects are suppressed.

### [Solution to Problem]

Some aspects of the present disclosure provide the following [1] to [15].
[1] A packaging material including a structure in which a transparent vapor-deposited barrier film, an oriented nylon film, and an unoriented polypropylene film are laminated in this order,
   in which the transparent vapor-deposited barrier film and the oriented nylon film are laminated via an adhesive layer including a cured product of a solvent-free adhesive, and
   a ratio of a Young's modulus in an MD direction of the unoriented polypropylene film to a thickness of the unoriented polypropylene film is 9.0 MPa/µm or more.
[2] The packaging material according to [1], in which the Young's modulus in the MD direction of the unoriented polypropylene film is 450 MPa or more.
[3] The packaging material according to [1] or [2], in which the Young's modulus in the MD direction of the unoriented polypropylene film is 1200 MPa or less.
[4] The packaging material according to any one of [1] to [3], in which the thickness of the unoriented polypropylene film is 100 µm or less.
[5] The packaging material according to any one of [1] to [4], in which the thickness of the unoriented polypropylene film is 10 µm or more.
[6] The packaging material according to any one of [1] to [5], in which the ratio of the Young's modulus in the MD direction of the unoriented polypropylene film to the thickness of the unoriented polypropylene film is 18.0 MPa/µm or less.
[7] The packaging material according to any one of [1] to [6], in which a ratio of a Young's modulus in an MD direction of the oriented nylon film to a thickness of the oriented nylon film is 100 to 250 MPa/µm.
[8] The packaging material according to any one of [1] to [7], in which a Young's modulus in an MD direction of the oriented nylon film is 2000 to 5000 MPa.
[9] The packaging material according to any one of [1] to [8], in which a thickness of the oriented nylon film is 50 µm or less.
[10] The packaging material according to any one of [1] to [9], in which the transparent vapor-deposited barrier film has a structure in which a resin film, a transparent vapor-deposited layer, and a protective layer are laminated in this order, and is arranged such that the resin film serves as an outer layer and the protective layer serves as an inner layer.
[11] The packaging material according to any one of [1] to [10], in which the solvent-free adhesive is a polyurethane-based adhesive containing a polyisocyanate component and a polyol component.
[12] The packaging material according to any one of [1] to [11], in which the oriented nylon film and the unoriented polypropylene film are laminated via an adhesive layer containing a cured product of a solvent-free adhesive.
[13] The packaging material according to any one of [1] to [12], in which a ratio of a bubble area relative to an area of the adhesive layer is less than 1% when the adhesive layer is observed from a lamination direction.
[14] A packaging bag made from the packaging material according to any one of [1] to [13].
[15] A method for manufacturing the packaging material according to any one of [1] to [13], the method including:
   preparing a laminated film having a structure in which the transparent vapor-deposited barrier film, the oriented nylon film, and the unoriented polypropylene film are laminated in this order, the transparent vapor-deposited barrier film and the oriented nylon film being laminated via a layer including the solvent-free adhesive; and
   winding the laminated film into a roll, and then curing the solvent-free adhesive by aging the rolled laminated film at 20 to 60°C for 12 hours or more.

### [Advantageous Effects of the Invention]

According to one aspect of the present disclosure, it is possible to suppress appearance defects that occur when a solvent-free adhesive is used to bond a transparent vapor-deposited barrier film to an oriented nylon film in the manufacture of a packaging material. According to another aspect of the present disclosure, it is possible to provide a packaging material in which the above appearance defects are suppressed.

### [Brief Description of the Drawings]

[FIG. 1] FIG. 1 is a schematic cross-sectional view of a packaging material according to an embodiment.
[FIG. 2] FIG. 2 is a schematic cross-sectional view showing a laminated film used in the manufacture of the packaging material shown in FIG. 1.
[FIG. 3] FIG. 3 is a plan view showing a packaging bag of one embodiment.

### [Description of the Embodiments]

As used herein, a numerical range indicated using "to" means a range including the numerical values stated before and after "to" as the minimum and maximum values, respectively. The units of the numerical values stated before and after "to" are the same unless specifically stated otherwise. In addition, in the numerical ranges described herein, the upper limit values or lower limit values of the numerical ranges may be replaced with values shown in examples. Individually described upper limit values and lower limit values may be combined as appropriate. Furthermore, "A or B" means that it suffices if either one of A and B is included, and both may be included.

### <Packaging Material and Method for Manufacturing the Same>

An embodiment of the present disclosure is a packaging material including a structure in which a transparent vapor-deposited barrier film, an oriented nylon film, and an unoriented polypropylene film are laminated in this order, in which the transparent vapor-deposited barrier film and the oriented nylon film are laminated via an adhesive layer including a cured product of a solvent-free adhesive, and a ratio of a Young's modulus in an MD direction of the unoriented polypropylene film to a thickness of the unoriented polypropylene film (MD Young's modulus/thickness) is 9.0 MPa/µm or more.

Another embodiment of the present disclosure is a method for manufacturing the packaging material according to the above embodiment, the method including: preparing a laminated film having a structure in which the transparent vapor-deposited barrier film, the oriented nylon film, and the unoriented polypropylene film are laminated in this order, the transparent vapor-deposited barrier film and the oriented nylon film being laminated via a layer including the solvent-free adhesive; and winding the laminated film into a roll, and then curing the solvent-free adhesive by aging the rolled laminated film at 20 to 60°C for 12 hours or more.

According to the method for the above embodiment, it is possible to suppress appearance defects that occur when a solvent-free adhesive is used to bond a transparent vapor-deposited barrier film to an oriented nylon film. Therefore, the packaging material of the above embodiment tends to have a good appearance. Specifically, for example, a ratio of a bubble area relative to an area of the adhesive layer is less than 1% when the adhesive layer is observed from a lamination direction. According to the method for the above embodiment, the area ratio of the bubbles can also be less than 0.5%. When a plurality of adhesive layers are present, the areas of all adhesive layers observed from the lamination direction are summed to determine the total area. However, when adhesive layers overlap each other, only the uppermost adhesive layer is deemed to be observed. The same applies to the bubble area.

Although the reason the above effect is obtained is not clear, it is speculated as follows. First, as described above, the appearance defects that occur when a solvent-free adhesive is used are thought to arise, for example, due to the prolonged aging period required to cure the adhesive, and due to bubbles remaining between the films (in particular, at the interface between the adhesive layer and a film) caused by factors such as surface irregularities on the coating film resulting from the increased viscosity of the adhesive. Meanwhile, when the laminated film is aged after being formed into a roll, it is speculated that the winding pressure compresses the space between the films, thereby making it easier for the bubbles to permeate through the films and be released to the outside. Furthermore, in the above method, since the above-described ratio (MD Young's modulus/thickness) of the unoriented polypropylene film is 9.0 MPa/µm or more, it is speculated that the compression between the films is enhanced, promoting the permeation of the bubbles, thereby improving the appearance of the packaging material.

With reference to the drawings, some embodiments of the present disclosure will be described in detail. Throughout the drawings, the same or corresponding components are denoted by the same reference signs, and duplicated description is omitted. The dimensional ratios in the drawings are not limited to those as illustrated.

### (Packaging Material)

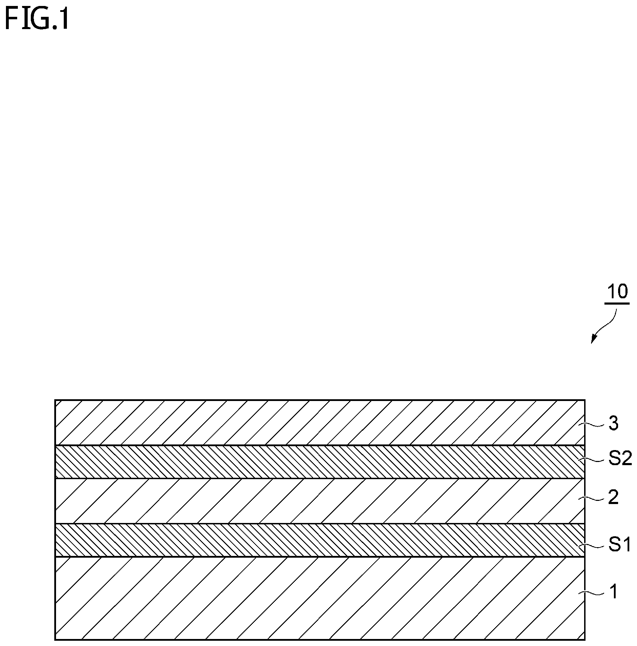

FIG. 1 is a schematic cross-sectional view of a packaging material according to an embodiment. A packaging material 10 in FIG. 1 has a structure in which a transparent vapor-deposited barrier film 1, an oriented nylon film 2, and an unoriented polypropylene film 3 are laminated in this order. The transparent vapor-deposited barrier film 1 and the oriented nylon film 2 are laminated via a first adhesive layer S1, and the oriented nylon film 2 and the unoriented polypropylene film 3 are laminated via a second adhesive layer S2. The thickness of the packaging material 10 is, for example, 70 to 100 µm. The packaging material 10 is suitable for a packaging body subjected to heat treatment (e.g., heat sterilization) such as retort treatment or boiling treatment.

### [Transparent Vapor-Deposited Film]

The transparent vapor-deposited barrier film 1 is a functional film having gas-barrier properties such as water vapor barrier properties and oxygen barrier properties, and also having transparency to visible light. Here, gas-barrier properties refer to the function of preventing gas permeation, and a film having water vapor barrier properties means that the water vapor transmission rate (WVTR, unit: g/m²/day), measured in accordance with JIS K 7129-5 (2016) using a water vapor transmission rate measuring device (DELTAPERM manufactured by Technolox) under conditions of 40°C and 90% relative humidity, is 1.0 g/m²/day or less. Furthermore, a film having oxygen barrier properties means that the oxygen transmission rate (OTR, unit: cc/m²/day/atm), measured in accordance with JIS K 7126-2 (2006) using an oxygen transmission rate measuring device (OX-TRAN 2/21 model manufactured by MOCON) under conditions of 25°C and 80% relative humidity, is 2 cc/m²/day/atm or less. A film having transparency means that the total light transmittance of the film, measured in accordance with JIS K 7361-1:1997 using a simultaneous color and turbidity meter ("COH400" manufactured by Nippon Denshoku Industries Co., Ltd.), is 85% or more.

From the perspective of protecting the vapor-deposited layer from scratches during processing steps, the transparent vapor-deposited barrier film 1 may have a structure in which a resin film, a transparent vapor-deposited layer, and a protective layer are laminated in this order. A transparent vapor-deposited barrier film having such a structure may be provided such that the resin film serves as the outer layer (the side opposite to the oriented nylon film 2) and the protective layer serves as the inner layer (the oriented nylon film 2 side).

Examples of the resin material of the resin film include polyesters such as polyethylene terephthalate (PET) and polyethylene naphthalate (PEN), polyolefins such as polyethylene and polypropylene, polystyrene, polyamides such as nylon 66, polycarbonate, polyacrylonitrile film, and polyimide. The resin film may contain one of these alone, or may contain two or more of these.

The resin film may be an oriented film or an unoriented film. The resin film may be an oriented film due to its good mechanical strength and dimensional stability. An oriented film may be a uniaxially oriented film or a biaxially oriented film.

The surface of the resin film may be subjected to various pretreatments such as corona treatment, plasma treatment, and ozone treatment in order to improve adhesion with the transparent vapor-deposited layer.

The thickness of the resin film can be appropriately changed according to various requirements of the packaging material, such as resistance and processability. The thickness of the resin film may be, for example, 3 to 200 µm, and may be 6 to 30 µm from the perspective of enhancing the flexibility of the packaging bag.

The transparent vapor-deposited layer is a layer formed by vapor deposition of an inorganic material such as a metal or a metal oxide capable of imparting gas-barrier properties. Examples of the inorganic material include silicon oxide, aluminum oxide, and composites thereof. The vapor deposition of the inorganic material may be either physical vapor deposition or chemical vapor deposition. Examples of the vapor deposition method include known vapor deposition methods such as vacuum vapor deposition, sputtering, and chemical vapor deposition (CVD).

The thickness of the transparent vapor-deposited layer may be, for example, 10 to 50 nm, or 15 to 30 nm. The thicker the transparent vapor-deposited layer, the higher the barrier performance, and the thinner the transparent vapor-deposited layer, the higher the transparency of the transparent vapor-deposited layer.

The protective layer is a layer formed of a material containing at least one selected from the group consisting of condensates of metal alkoxides, condensates of hydrolysis products of metal alkoxides, and condensates of alkoxysilylalkyl isocyanurates. The protective layer can be formed using, for example, a coating liquid obtained by mixing a metal alkoxide or a hydrolysis product of a metal alkoxide, a polymer containing vinyl alcohol, an isocyanate compound, and a silane coupling agent.

Examples of the metal alkoxide include alkoxysilanes such as tetraalkoxysilanes, alkyltrialkoxysilanes, and dialkyldialkoxysilanes.

Examples of the polymer containing vinyl alcohol include polyvinyl alcohol, polyvinyl acetate, and ethylene-vinyl acetate copolymer.

Examples of the isocyanate compound include aromatic isocyanate compounds such as tolylene diisocyanate and xylylene diisocyanate.

Examples of the silane coupling agent include epoxysilane coupling agents, aminosilane coupling agents, vinylsilane coupling agents, and acrylsilane coupling agents.

The thickness of the protective layer may be, for example, 0.01 to 50 µm. When the thickness of the protective layer is 0.01 µm or more, the gas-barrier performance of the protective layer can be enhanced. When the thickness of the protective layer is 50 µm or less, occurrence of cracking in the protective layer is prevented.

The transparent vapor-deposited barrier film may have an anchor coat layer between the resin film and the transparent vapor-deposited layer for purposes such as improving adhesion between the resin film and the transparent vapor-deposited layer and improving gas-barrier performance.

The anchor coat layer may be a layer formed from a known anchor coating agent. Examples of the anchor coating agent include various materials such as acrylic resins, epoxy resins, polyester resins, acrylic urethane resins, polyester urethane resins, polyether urethane resins, polyimide resins, melamine resins, phenol resins, inorganic silica such as organically modified colloidal silica, and organosilane compounds such as silane coupling agents and hydrolysates thereof. These materials may be used alone, or as a mixture or composite. It is also possible to use these materials as a main agent in combination with any corresponding curing agent.

The thickness of the anchor coat layer may be, for example, 0.01 to 5 µm, or 0.03 to 3 µm or 0.05 to 2 µm.

The transparent vapor-deposited barrier film 1 may be provided with a printed layer. When the transparent vapor-deposited barrier film 1 has a structure in which a resin film, a transparent vapor-deposited layer, and a protective layer are laminated in this order, the printed layer may be disposed on the protective layer (on the side opposite to the transparent vapor-deposited layer side).

The printed layer is an ink layer formed by one or more inks. Examples of inks include general gravure inks, flexographic inks, offset inks, and digital printing inks. These inks may be either oil-based inks or water-based inks. The inks may be colored inks containing a pigment and a binder resin, or colorless inks containing a binder resin but not containing a pigment. The pigment and binder resin may be any known pigment and binder resin suitable for the application. When an oil-based gravure ink is used, an example of the binder resin is a mixture of urethane resin and vinyl chloride-vinyl acetate copolymer resin. The ink may contain various additives other than a pigment and binder resin, as well as a solvent (e.g., a volatile organic solvent). Examples of colored inks also include plant oil inks and biomass inks.

The thickness of the printed layer is, for example, 0.2 to 8 µm.

Depending on the application, the transparent vapor-deposited barrier film may have other functional layers such as a concealing layer.

The thickness of the transparent vapor-deposited barrier film 1 may be, for example, 3 to 200 µm.

### [Oriented Nylon Film]

The oriented nylon film 2 is an oriented film containing a nylon resin (polyamide resin) as a main component. The content of the nylon resin in the oriented nylon film 2 is, for example, 90% by mass or more. The oriented nylon film 2 may be composed of only a nylon resin.

Examples of the nylon resin include nylon 6, nylon 66, nylon 12, nylon 6/66 copolymers, nylon 6/12 copolymers, and metaxylylene adipamide/nylon 6 copolymers.

The oriented nylon film 2 may further contain, in addition to a nylon resin, various additives such as flame retardants, slip agents, anti-blocking agents, antioxidants, photostabilizers, tackifiers, and antistatic agents.

The oriented nylon film 2 may be a uniaxially oriented film or a biaxially oriented film.

The surface of the oriented nylon film 2 may be subjected to surface activation treatment such as corona treatment, flame treatment, or plasma treatment.

From the perspective of puncture resistance after lamination, the Young's modulus of the oriented nylon film 2 in the machine direction (MD direction) may be, for example, 2000 to 5000 MPa, or 2200 to 4000 MPa or 2400 to 3000 MPa.

The Young's modulus of the oriented nylon film 2 in the transverse direction (TD direction) may be, for example, 1500 to 4500 MPa, or 1900 to 3500 MPa or 2200 to 3000 MPa.

The Young's modulus (in the MD direction and TD direction) of the oriented nylon film 2 can be measured in accordance with JIS K 7127 using a tensile testing machine (e.g., RTC-1250A manufactured by Orientec Co., Ltd.). The test temperature specified in JIS K 7127 is 23 ± 2°C (recommended), and the "Young's modulus" as used herein is defined as the Young's modulus at 23°C. When the MD direction and the TD direction of the oriented nylon film 2 in the packaging material 10 are unknown, they can be identified based on the Young's modulus of the oriented nylon film 2. In the oriented nylon film 2, the Young's modulus in the MD direction typically exhibits the highest value. Therefore, the direction exhibiting the highest Young's modulus is the MD direction, and the direction perpendicular to this direction is the TD direction.

The thickness of the oriented nylon film 2 may be 50 µm or less, or 30 µm or less or 20 µm or less, from the perspective of facilitating permeation of bubbles and obtaining a better appearance more easily. The thickness of the oriented nylon film 2 may be 10 µm or more from the perspective of obtaining sufficient strength (e.g., puncture strength). From the above perspectives, the thickness of the oriented nylon film 2 may be, for example, 10 to 50 µm, or 10 to 30 µm or 10 to 20 µm. The thickness of the oriented nylon film 2 is an average of measurements obtained at any 10 locations using a contact-type thickness gauge.

The ratio of the Young's modulus in the MD direction of the oriented nylon film 2 to the thickness of the oriented nylon film 2 (MD Young's modulus/thickness) may be, for example, 100 to 250 MPa/µm, or 130 to 220 MPa/µm or 150 to 200 MPa/µm, from the perspective of achieving both good puncture strength and appearance.

### [Unoriented Polypropylene Film]

The unoriented polypropylene film 3 is an unoriented film containing a polypropylene resin as a main component. The content of the polypropylene resin in the unoriented polypropylene film 3 is, for example, 90% by mass or more. The unoriented polypropylene film 3 may consist of only a polypropylene resin.

The polypropylene resin may be a homopolymer of propylene or a copolymer of propylene and another comonomer. Examples of copolymers include propylene-ethylene random copolymers, propylene-ethylene block copolymers, and propylene-α-olefin copolymers. The polypropylene resin may also be, for example, an acid-modified polypropylene obtained by graft-modifying polypropylene using an unsaturated carboxylic acid, an acid anhydride of an unsaturated carboxylic acid, an ester of an unsaturated carboxylic acid, or the like.

The unoriented polypropylene film 3 may further contain, in addition to the polypropylene resin, various additives such as flame retardants, slip agents, anti-blocking agents, antioxidants, photostabilizers, tackifiers, and antistatic agents.

The Young's modulus of the unoriented polypropylene film 3 in the MD direction may be 450 MPa or more, 500 MPa or more, or 600 MPa or more, from the perspective of obtaining a better appearance more easily. The Young's modulus of the unoriented polypropylene film 3 in the MD direction may be 1200 MPa or less, 1000 MPa or less, or 800 MPa or less, from the perspective of impact resistance. From these perspectives, the Young's modulus of the unoriented polypropylene film 3 in the MD direction may be, for example, 450 to 1200 MPa, or 500 to 1000 MPa or 600 to 800 MPa.

The Young's modulus of the unoriented polypropylene film 3 in the TD direction may be, for example, 400 to 1000 MPa, or 450 to 900 MPa or 500 to 800 MPa.

The Young's modulus (in the MD direction and TD direction) of the unoriented polypropylene film 3 can be measured by the same method as the Young's modulus of the oriented nylon film. When the MD direction and the TD direction of the unoriented polypropylene film 3 in the packaging material 10 are unknown, they can be identified based on the Young's modulus of the unoriented polypropylene film 3. In the unoriented polypropylene film 3, the Young's modulus in the MD direction typically exhibits the highest value. Therefore, the direction exhibiting the highest Young's modulus is the MD direction, and the direction perpendicular to this direction is the TD direction.

The thickness of the unoriented polypropylene film 3 may be 100 µm or less, 80 µm or less, or 60 µm or less, from the perspective of facilitating permeation of bubbles and obtaining a better appearance more easily. The thickness of the unoriented polypropylene film 3 may be 10 µm or more from the perspective of achieving stable heat seal strength. From the above perspectives, the thickness of the unoriented polypropylene film 3 may be, for example, 10 to 100 µm, or 10 to 80 µm or 10 to 60 µm. The thickness of the unoriented polypropylene film 3 is an average of measurements obtained at any 10 locations using a contact-type thickness gauge.

The ratio of the Young's modulus in the MD direction of the unoriented polypropylene film 3 to the thickness of the unoriented polypropylene film 3 (MD Young's modulus/thickness) is 9.0 MPa/µm or more. From the perspective of obtaining a better appearance more easily, it may be 10.0 MPa/µm or more, or 11.0 MPa/µm or more. The ratio of the Young's modulus in the MD direction of the unoriented polypropylene film 3 to the thickness of the unoriented polypropylene film 3 (MD Young's modulus/thickness) may be 18.0 MPa/µm or less, 17.0 MPa/µm or less, or 16.0 MPa/µm or less, from the perspective of low-temperature heat sealability. From the above perspectives, the ratio of the Young's modulus in the MD direction of the unoriented polypropylene film 3 to the thickness of the unoriented polypropylene film 3 (MD Young's modulus/thickness) may be, for example, 9.0 to 18.0 MPa/µm, or may be 10.0 to 17.0 MPa/µm or 11.0 to 16.0 MPa/µm.

### [Adhesive Layer]

The adhesive layers (the first and second adhesive layers S1 and S2) are composed of a cured product of a solvent-free adhesive. From the perspectives of cost, hygiene, and processability, the solvent-free adhesive may be a polyurethane-based adhesive containing a polyisocyanate component and a polyol component. The polyurethane-based adhesive may either be a two-component adhesive in which the polyisocyanate component and the polyol component are mixed at the time of use, or a one-component adhesive in which the polyisocyanate component and the polyol component are mixed in advance.

The polyisocyanate component may be a polyisocyanate monomer or a polyisocyanate derivative. The polyisocyanate component may contain one of these alone, or may contain two or more of these.

The polyisocyanate monomer may be diisocyanate from the perspective of ease of procurement. The diisocyanate may be an aliphatic diisocyanate such as hexamethylene diisocyanate (HDI), an alicyclic diisocyanate such as isophorone diisocyanate (IPDI), an araliphatic diisocyanate such as xylylene diisocyanate (XDI), or an aromatic diisocyanate such as methylene bis(4,1-phenylene) diisocyanate (MDI).

The polyisocyanate derivative is a compound derived from the above polyisocyanate monomer. The polyisocyanate derivative may be, for example, a multimer (e.g., a dimer, trimer, or pentamer), a biuret, an adduct, or an allophanate of the polyisocyanate monomer. The polyisocyanate derivative may also be an isocyanate-terminated prepolymer derived from the above polyisocyanate monomer.

The isocyanate-terminated prepolymer is, for example, a compound obtained by subjecting a polyisocyanate (polyisocyanate monomer or polyisocyanate derivative) and a polyol (particularly a diol) described below to a urethanization reaction at a ratio such that the equivalent ratio of isocyanate groups of the polyisocyanate to hydroxyl groups of the polyol (NCO/OH) is greater than 1.

The polyisocyanate component may contain an aliphatic diisocyanate or a derivative thereof and an aromatic diisocyanate or a derivative thereof from the perspective of enhancing adhesion strength, and may contain HDI or a derivative thereof, IPDI or a derivative thereof, and XDI or a derivative thereof from the perspective of food hygiene.

Examples of the polyol component include polyester polyols, polyether polyols, polyether ester polyols, and polyurethane polyols. The polyol component may contain one of these alone, or may contain two or more of these. The polyol component may be partially terminal acid-modified so as to have a valence of, for example, 2 to 20.

The polyol component may contain a polyester polyol from the perspective of heat resistance. The polyester polyol may be, for example, an ester reaction product obtained by reacting a polyvalent carboxylic acid, a dialkyl ester of a polyvalent carboxylic acid, or a mixture thereof with a glycol-based compound. Examples of the polyvalent carboxylic acid include succinic acid, glutaric acid, isophthalic acid, terephthalic acid, adipic acid, pimelic acid, suberic acid, azelaic acid, sebacic acid, dodecanedioic acid, and dimer acid. Examples of the glycol-based compound include ethylene glycol, diethylene glycol, triethylene glycol, propylene glycol, dipropylene glycol, tripropylene glycol, 2-methyl-1,3-propanediol, butylene glycol, neopentyl glycol, and 1,6-hexanediol. The use of aromatic carboxylic acids such as isophthalic acid and terephthalic acid can be expected to improve heat resistance. Furthermore, by using glycols having an ether moiety such as diethylene glycol, triethylene glycol, and dipropylene glycol, or glycols having a branched structure such as propylene glycol and 2-methyl-1,3-propanediol, the adhesive viscosity can be reduced, which facilitates adhesive coating and is expected to suppress bubble appearance defects.

From the perspective of reducing adhesive viscosity, the polyol component may contain a polyether polyol, which has a lower viscosity than polyester polyol. Reducing the viscosity of the adhesive facilitates adhesive coating, which can be expected to suppress bubble appearance defects.

From the perspectives of food hygiene and heat resistance, the combination of the polyisocyanate and the polyol may be HDI or a derivative thereof and a polyester polyol, or IPDI or a derivative thereof and a polyester polyol. From the perspective of fast curing, it may be XDI or a derivative thereof and a polyester polyol.

The basis weight of the adhesive layers (first and second adhesive layers S1 and S2) may be, for example, 0.5 to 3.0 g/m² or 1.0 to 2.0 g/m².

### (Laminated Film)

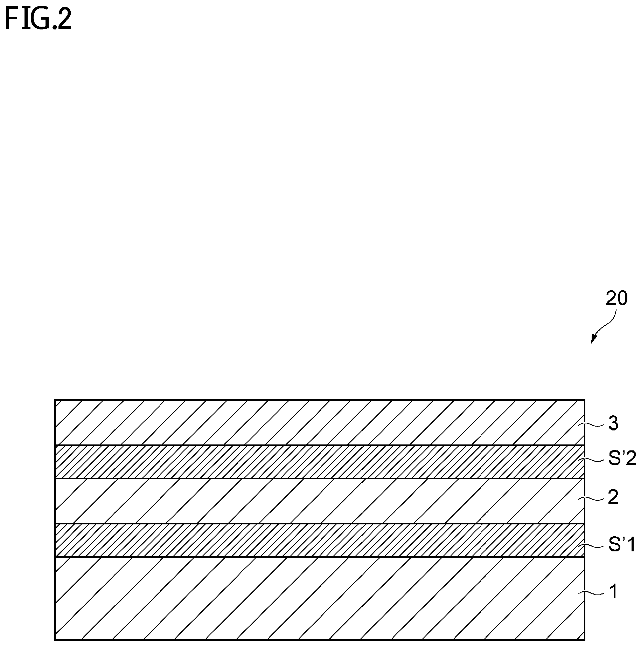

FIG. 2 is a schematic cross-sectional view showing a laminated film used in the manufacture of the packaging material 10 shown in FIG. 1. A laminated film 20 has a structure in which the transparent vapor-deposited barrier film 1, the oriented nylon film 2, and the unoriented polypropylene film 3 are laminated in this order. The transparent vapor-deposited barrier film 1 and the oriented nylon film 2 are laminated via a first uncured layer S'1, and the oriented nylon film 2 and the unoriented polypropylene film 3 are laminated via a second uncured layer S'2. The first and second uncured layers S'1 and S'2 are layers made of a solvent-free adhesive, and become the first and second adhesive layers S1 and S2, respectively, upon curing.

The manufacture of the laminated film 20 includes, for example, a step of bonding one surface of the transparent vapor-deposited barrier film 1 to one surface of the oriented nylon film 2 via the first uncured layer S'1 (first lamination step), and a step of bonding one surface of the oriented nylon film 2 (the surface on the side opposite to the surface bonded to the transparent vapor-deposited barrier film 1) and one surface of the unoriented polypropylene film 3 via the second uncured layer S'2 (second lamination step). The order of the first and second lamination steps is not particularly limited. The second lamination step may be performed after the first lamination step, or the first lamination step may be performed after the second lamination step.

In the first lamination step, the first uncured layer S'1 may be formed by applying a solvent-free adhesive onto one surface (e.g., the protective layer-side surface) of the transparent vapor-deposited barrier film 1, or by applying a solvent-free adhesive onto one surface of the oriented nylon film 2. In the former case, one surface of the oriented nylon film 2 may be bonded to the surface of the transparent vapor-deposited barrier film 1 on which the first uncured layer S'1 is provided. In the latter case, one surface of the transparent vapor-deposited barrier film 1 may be bonded to the surface of the oriented nylon film 2 on which the first uncured layer S'1 is provided.

In the second lamination step, the second uncured layer S'2 may be formed by applying a solvent-free adhesive onto one surface of the oriented nylon film 2 (the surface on the side opposite to the surface bonded to the transparent vapor-deposited barrier film 1), or by applying a solvent-free adhesive onto one surface of the unoriented polypropylene film 3. In the former case, one surface of the unoriented polypropylene film 3 may be bonded to the surface of the oriented nylon film 2 on which the second uncured layer S'2 is provided. In the latter case, one surface of the oriented nylon film 2 (the surface on the side opposite to the surface bonded to the transparent vapor-deposited barrier film 1) may be bonded to the surface of the unoriented polypropylene film 3 on which the second uncured layer S'2 is provided.

The application of the solvent-free adhesive in the first and second lamination steps can be performed using, for example, a roll coater, a bar coater, a spray coater, a gravure coater, or a curtain coater. The coating speed may be, for example, 50 to 300 m/min. When a roll coater is used, the coating speed can be adjusted by the conveyance speed of the film being coated. The temperature of the solvent-free adhesive during application may be, for example, 40 to 100°C. The viscosity of the solvent-free adhesive during application (viscosity at the above application temperature) may be, for example, 50 to 3000 mPa·s. Here, the viscosity of the solvent-free adhesive is the cone-plate viscosity in accordance with JIS K 5600-2-2:2014.

The lamination in the first and second lamination steps can be performed using a solventless laminator. The lamination temperature may be, for example, 20 to 70°C. The lamination speed may be, for example, 50 to 300 m/min. Although appearance defects are more likely to occur as the lamination speed increases, in the method for the present embodiment, a good appearance can be obtained even when the lamination speed is 100 m/min or more (e.g., 150 to 250 m/min).

### (Method for Manufacturing Packaging Material)

The method for manufacturing the packaging material 10 includes preparing the laminated film 20 shown in FIG. 2, winding the laminated film 20 into a roll, and then curing the solvent-free adhesive by aging the rolled laminated film 20 at 20 to 60°C for 12 hours or more.

In the method for manufacturing the packaging material 10, a previously prepared laminated film 20 may be used, or the laminated film 20 may be manufactured by the method described above.

The winding of the laminated film 20 can be performed using, for example, a known winding device. The winding tension (tension applied to the laminated film 20) when winding the laminated film 20 may be, for example, 100 to 300 N/m. The radius of the roll of the laminated film 20 obtained after winding may be, for example, 30 to 130 cm.

The aging temperature of the laminated film 20 is 20 to 60°C, and may be 25 to 55°C or 35 to 50°C. The aging time of the laminated film 20 is 12 hours or more, and may be, for example, 12 to 148 hours, 24 to 120 hours, or 48 to 96 hours.

### <Packaging Bag>

Another embodiment of the present disclosure is a packaging bag made from the packaging material of the above embodiment.

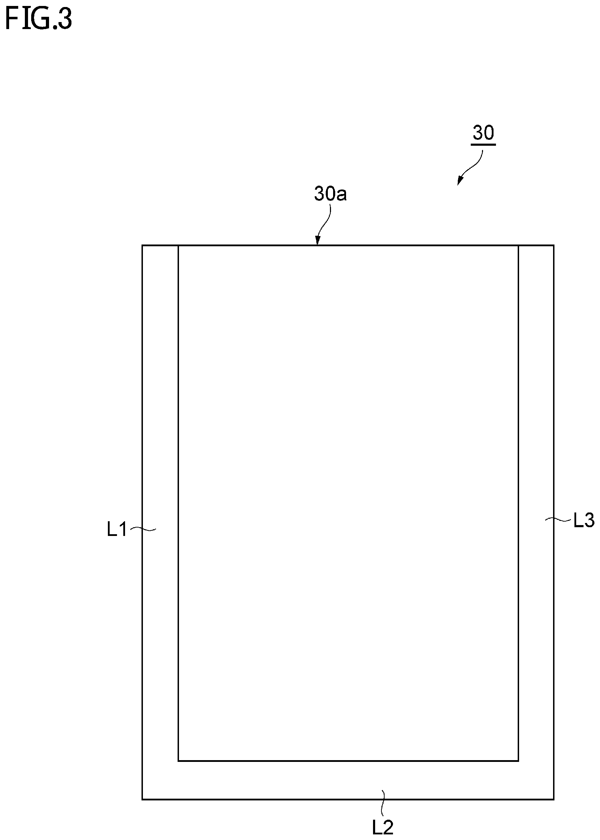

FIG. 3 is a plan view showing a packaging bag of one embodiment. The packaging bag 30 is obtained by processing the packaging material 10 into a bag shape. The packaging bag 30 is obtained by stacking a pair of packaging materials 10 such that the surfaces of the unoriented polypropylene films 3 face each other, or by folding a single packaging material 10 such that the surfaces of the unoriented polypropylene film 3 face each other, and heat-sealing peripheral edge portions L1, L2, and L3 of the stacked packaging materials.

The packaging bag 30 has an opening 30a that is not heat-sealed. An object is accommodated in the packaging bag 30 through the opening 30a, and then the opening 30a is heat-sealed to seal the packaging bag 30, thereby obtaining a packaging body including the packaging bag 30 and the contents. The object (contents) accommodated in the packaging bag 30 is not particularly limited, and may be a solid, a liquid, or a mixture thereof. Examples of the contents include food, beverages, pharmaceuticals, and electronic devices.

The packaging bag is suitable for a packaging body subjected to heat treatment (e.g., heat sterilization) such as retort treatment or boiling treatment.

The packaging material and the method for manufacturing the same, and the packaging body of the present disclosure have been described. However, the present disclosure is not limited to the above embodiments.

For example, the packaging material may have films other than the transparent vapor-deposited barrier film, the oriented nylon film, and the unoriented polypropylene film, as well as adhesive layers other than the first and second adhesive layers. For example, the packaging material may include a film provided with a printed layer (film with a printed layer). The film with a printed layer is not particularly limited, but may have transparency so that a pattern formed by the printed layer can be displayed. The packaging material may also include films having other functional layers such as a concealing layer. The film with a printed layer may have the other functional layers. The details of the printed layer are the same as described above.

The second adhesive layer of the packaging material may be formed of a solvent-based adhesive. The solvent-based adhesive may be a known dry lamination adhesive (e.g., a urethane-based adhesive) used in the present technical field. When a solvent-based adhesive is used to form the second adhesive layer, a laminated film can be obtained in the same manner as when a solvent-free adhesive is used, except that a step of drying the adhesive after application is performed.

The second uncured layer in the laminated film may be the second adhesive layer.

The packaging bag may be in the form of, for example, pillow packaging, three-side-sealed packaging, or gusset packaging.

### Examples

Hereinafter, the present disclosure will be described based on Examples and Comparative Examples. The present disclosure is not limited to the following examples.

### <Preparation of Materials>

The following materials were prepared.

### [Transparent Vapor-Deposited Barrier Film with Printed Layer]

A transparent vapor-deposited barrier film manufactured by Toppan Printing Co., Ltd. was prepared (trade name "GL-PET #12"; a film having a structure in which a vapor-deposited alumina layer with a thickness of 0.01 nm and a protective layer (polyvinyl alcohol and silane coupling agent) with a thickness of 0.3 µm are laminated in this order on a PET film with a thickness of 12 µm). A printed layer (thickness: 1.2 µm) composed of colored ink was formed on the lamination surface (the surface of the protective layer) of this transparent vapor-deposited barrier film by gravure printing. The ink "Lioalpha White" manufactured by Toyo Ink Co., Ltd. was used as the colored ink, and printing was performed such that a printed portion composed of the colored ink (white ink) and an unprinted plain portion formed a checkerboard pattern. Through the above operations, a transparent vapor-deposited barrier film with a printed layer was obtained.

### [Oriented Nylon Film]

ONMB-RT manufactured by Unitika Ltd. (thickness: 15 µm, Young's modulus in the MD direction: 2500 MPa, Young's modulus in the TD direction: 2300 MPa)

### [Unoriented Polypropylene Film]

The unoriented polypropylene films shown in Table 1 below.

**[Table 1]**

| | Product | Thickness (µm) | Young's Modulus (MPa) | |
|---|---|---|---|---|
| | | | MD | TD |
| CPP film 1 | Toray Industries, Inc. "ZK-207" | 50 | 780 | 630 |
| CPP film 2 | | 60 | 680 | 560 |
| CPP film 3 | | 70 | 630 | 520 |
| CPP film 4 | Mitsui Chemicals, Inc. "RXC-22" | 50 | 455 | 407 |
| CPP film 5 | Toyobo Co., Ltd. "Pylen P1146" | 50 | 450 | 400 |
| CPP film 6 | | 60 | 440 | 400 |
| CPP film 7 | | 70 | 440 | 400 |
| CPP film 8 | | 80 | 440 | 400 |
| CPP film 9 | Toyobo Co., Ltd. "Pylen P1147" | 50 | 620 | 450 |
| CPP film 10 | | 60 | 620 | 450 |
| CPP film 11 | | 70 | 590 | 450 |
| CPP film 12 | | 100 | 530 | 450 |

### [Solvent-Free Adhesive]

A two-component urethane-based solvent-free adhesive containing the following polyol component and polyisocyanate component at an equivalent ratio of 1:1.
- Polyol component: "TSN-4864A" (polyester polyol) manufactured by Toyo-Morton Ltd.
- Polyisocyanate component: "TSN-4864B-3" (a polyisocyanate mixture containing HDI and IPDI) manufactured by Toyo-Morton Ltd.

### <Example 1>

The above transparent vapor-deposited barrier film with a printed layer and the above oriented nylon film were laminated by solventless lamination via the above solvent-free adhesive to obtain a first laminated film. During the lamination, the solvent-free adhesive was applied to the lamination surface of the transparent vapor-deposited barrier film with a printed layer (on the surface of the protective layer on which the printed layer was formed) such that the coating weight would be 1.8 g/m². The temperature of the adhesive during application was 80°C, the cone-plate viscosity of the adhesive during application was 430 mPa·s, the adhesive coating speed and lamination speed were 150 m/min, the lamination temperature was 50°C, and the coating distance was 400 m. The laminated film obtained after lamination was wound into a roll using a 3-inch core.

The first laminated film obtained above and a CPP film 1, which is an unoriented polypropylene film, were laminated by solventless lamination via the above solvent-free adhesive to obtain a second laminated film. During the lamination, the solvent-free adhesive was applied onto the unoriented polypropylene film such that the coating weight would be 1.8 g/m². Furthermore, the first laminated film was arranged such that the oriented nylon film would serve as the inner layer and the transparent vapor-deposited barrier film would serve as the outer layer. The temperature of the adhesive during application was 80°C, the cone-plate viscosity of the adhesive during application was 430 mPa·s, the adhesive coating speed and lamination speed were 200 m/min, the lamination temperature was 50°C, and the coating distance was 300 m. The laminated film obtained after lamination was wound into a roll using a 3-inch core.

After winding the second laminated film into a roll, the solvent-free adhesive was cured by aging the rolled second laminated film at 40°C for 72 hours. As a result, a packaging material was obtained having a structure in which a transparent vapor-deposited barrier film with a printed layer, an oriented nylon film, and an unoriented polypropylene film were laminated in this order via adhesive layers (the first and second adhesive layers) composed of a cured product of a solvent-free adhesive.

### <Examples 2 to 7 and Comparative Examples 1 to 5>

The packaging materials of Examples 2 to 7 and Comparative Examples 1 to 5 were obtained in the same manner as the packaging material of Example 1, except that the films shown in Table 2 were used as the unoriented polypropylene film.

### <Appearance Evaluation>

The appearance was evaluated as follows.

A sample was taken from a 5 m point from the outer portion of the obtained packaging material wound into a roll, and for both the printed portion and the unprinted portion of the packaging material, images were captured from the CPP surface at an observation magnification of 50x using a microscope (trade name "VHX-6000", manufactured by Keyence Corporation). After binarizing the images, the ratio of the bubble portion area to the total area of the observed image was measured as a quantitative observation result, and classified according to the following criteria.

### [Evaluation Criteria]

Excellent: Bubble area ratio of less than 0.5%
Good: Bubble area ratio of 0.5% or more and less than 1.0%
Fair: Bubble area ratio of 1.0% or more and less than 2.0%
Poor: Bubble area ratio of 2.0% or more

**[Table 2]**

| | Unoriented Polypropylene Film | | Appearance |
|---|---|---|---|
| | Type | Ratio (MD Young's Modulus/Thickness) | |
| Ex. 1 | CPP film 1 | 15.6 | Excellent |
| Ex. 2 | CPP film 2 | 11.3 | Excellent |
| Ex. 3 | CPP film 3 | 9.0 | Good |
| Ex. 4 | CPP film 4 | 9.1 | Good |
| Ex. 5 | CPP film 5 | 9.0 | Good |
| Comp. Ex. 1 | CPP film 6 | 7.3 | Fair |
| Comp. Ex. 2 | CPP film 7 | 6.3 | Fair |
| Comp. Ex. 3 | CPP film 8 | 5.5 | Poor |
| Ex. 6 | CPP film 9 | 12.4 | Excellent |
| Ex. 7 | CPP film 10 | 10.3 | Good |
| Comp. Ex. 4 | CPP film 11 | 8.4 | Fair |
| Comp. Ex. 5 | CPP film 12 | 5.3 | Poor |

### [Reference Signs List]

- 1: Transparent vapor-deposited barrier film,
- 2: Oriented nylon film,
- 3: Unoriented polypropylene film,
- 10: Packaging material,
- 20: Laminated film,
- 30: Packaging bag,
- 30a: Opening,
- S1: First adhesive layer,
- S2: Second adhesive layer,
- S'1: First uncured layer,
- S'2: Second uncured layer.

## Claims

1. A packaging material comprising a structure in which a transparent vapor-deposited barrier film, an oriented nylon film, and an unoriented polypropylene film are laminated in this order,
wherein the transparent vapor-deposited barrier film and the oriented nylon film are laminated via an adhesive layer including a cured product of a solvent-free adhesive, and
a ratio of a Young's modulus in an MD direction of the unoriented polypropylene film to a thickness of the unoriented polypropylene film is 9.0 MPa/µm or more.

2. The packaging material according to claim 1, wherein the Young's modulus in the MD direction of the unoriented polypropylene film is 450 MPa or more.

3. The packaging material according to claim 1, wherein the Young's modulus in the MD direction of the unoriented polypropylene film is 1200 MPa or less.

4. The packaging material according to claim 1, wherein the thickness of the unoriented polypropylene film is 100 µm or less.

5. The packaging material according to claim 1, wherein the thickness of the unoriented polypropylene film is 10 µm or more.

6. The packaging material according to claim 1, wherein the ratio of the Young's modulus in the MD direction of the unoriented polypropylene film to the thickness of the unoriented polypropylene film is 18.0 MPa/µm or less.

7. The packaging material according to claim 1, wherein a ratio of a Young's modulus in an MD direction of the oriented nylon film to a thickness of the oriented nylon film is 100 to 250 MPa/µm.

8. The packaging material according to claim 1, wherein a Young's modulus in an MD direction of the oriented nylon film is 2000 to 5000 MPa.

9. The packaging material according to claim 1, wherein a thickness of the oriented nylon film is 50 µm or less.

10. The packaging material according to claim 1, wherein the transparent vapor-deposited barrier film has a structure in which a resin film, a transparent vapor-deposited layer, and a protective layer are laminated in this order, and is arranged such that the resin film serves as an outer layer and the protective layer serves as an inner layer.

11. The packaging material according to claim 1, wherein the solvent-free adhesive is a polyurethane-based adhesive containing a polyisocyanate component and a polyol component.

12. The packaging material according to claim 1, wherein the oriented nylon film and the unoriented polypropylene film are laminated via an adhesive layer including a cured product of a solvent-free adhesive.

13. The packaging material according to claim 1, wherein a ratio of a bubble area relative to an area of the adhesive layer is less than 1% when the adhesive layer is observed from a lamination direction.

14. A packaging bag made from the packaging material according to any one of claims 1 to 13.

15. A method for manufacturing the packaging material according to any one of claims 1 to 13, the method comprising:
preparing a laminated film having a structure in which the transparent vapor-deposited barrier film, the oriented nylon film, and the unoriented polypropylene film are laminated in this order, the transparent vapor-deposited barrier film and the oriented nylon film being laminated via a layer including the solvent-free adhesive; and
winding the laminated film into a roll, and then curing the solvent-free adhesive by aging the rolled laminated film at 20 to 60°C for 12 hours or more.
